# EUROPEAN PATENT SPECIFICATION

(11) **EP 2 833 590 B1**
(45) Date of publication and mention of the grant of the patent: **19.10.2016**
(21) Application number: 13831648.4
(22) Date of filing: 20.08.2013
(51) Int. Cl.: H04Q 11/00

(54) **TDM SERVICE PROCESSING METHOD, DEVICE AND SYSTEM**
VERFAHREN, VORRICHTUNG UND SYSTEM ZUR TDM-DIENSTVERARBEITUNG
PROCÉDÉ, DISPOSITIF ET SYSTÈME DE TRAITEMENT D'UN SERVICE TDM

(30) Priority: 20.08.2012 CN 201210296398
(43) Date of publication of application: 04.02.2015
(73) Proprietor: Huawei Technologies Co., Ltd., Longgang District Shenzhen, Guangdong 518129 (CN)
(72) Inventor: LI, Weiguo, Shenzhen Guangdong 518129 (CN); WEI, Ming, Shenzhen Guangdong 518129 (CN); LUO, Yong, Shenzhen Guangdong 518129 (CN)
(74) Representative: Gill Jennings & Every LLP
(86) International application number: PCT/CN2013/081892
(87) International publication number: WO 2014/029326

(56) References cited:
- EP-A1- 1 467 590
- EP-A1- 2 348 691
- EP-A1- 2 395 682
- CN-A- 1 855 921
- CN-A- 101 098 281
- CN-A- 101 150 876
- CN-A- 101 888 336
- JP-A- 2001 189 732
- MARCELO ALVES GUIMARAES ET AL: "Fractional E1 transport in Gigabit Passive Optical Network", MICROWAVE&OPTOELECTRONICS CONFERENCE (IMOC), 2011 SBMO/IEEE MTT-S INTERNATIONAL, IEEE, 29 October 2011 (2011-10-29), pages 606-611, XP032137608, DOI: 10.1109/IMOC.2011.6169342 ISBN: 978-1-4577-1662-1

## Description

### TECHNICAL FIELD

The present invention relates to the field of a passive optical network, and in particular, to a method, an apparatus and a system for processing a TDM service.

### BACKGROUND

As a new generation optical access technology, a GPON (Gigabit-capable Passive Optical Network, gigabit-capable passive optical network) provides an unprecedented high bandwidth with a downstream rate up to 2.5 Gbit/S compared with another PON (Passive Optical Network, passive optical network), and asymmetry characteristics of the GPON are more adapted to a broadband data service market. The GPON is formed of an OLT (Optical Line Terminal, optical line terminal), an ONT (Optical Network Termination, optical network terminal) and an ODN (Optical Distribution Network, optical distribution network). The OLT is located in a central equipment room and provides an upstream wide area network interface, which includes GE (Gigabit Ethernet, Gigabit Ethernet), ATM (Asynchronous Transfer Mode, asynchronous transfer mode), DS-3 and so on; and the ONT is located on a user side and provides a user with an application interface such as 10/100BaseT, T1/E1, and DS-3.

Voice (E1/T1) is transmitted over the GPON by using a TDM (Time Division Multiplexing, time division multiplexing) technology, that is, a transmission channel is split by time component (time slot) and each speech channel occupies one time slot thereof, so as to implement transmission of multiple calls over a same physical channel. A tunnel for a TDM service is established from the ONT to the OLT, and a TDM packet is packetized and encapsulated into a valid payload and then transmitted on a GPON network, where the valid payload is received on the OLT and converted into TDM. Currently, the TDM service is processed mainly in the following three manners:
(1) Native TDM manner: A valid payload is a GEM (GPON Encapsulation Mode) frame, and a TDM packet is directly encapsulated by the ONT into a GEM frame (TDMoGEM) of the GPON and then transmitted on the GPON. After the valid payload is received on the OLT, the valid payload is processed and forwarded to a TDM upstream interface board, and then restored to a TDM traffic flow by the TDM upstream interface board, thereby implementing centralized uploading of the TDM service. A forwarding model established by the OLT for a Native TDM service is a single flow.
   In the Native TDM manner, a user needs to know in advance that a TDM encapsulation type supported by the ONT is GEM, and manually configure a forwarding model corresponding to the GEM encapsulation type on the OLT; the user needs to perceive a difference in TDM encapsulation of the ONT, and configuration is relatively cumbersome, which does not help service release.
(2) CESOP (Circuit Emulation Service over PSN (Packet Switched Network, public switched network), Circuit Emulation Service over PSN) manner: A valid payload is a CESOP Ethernet packet, and a TDM packet is encapsulated by the ONT into a CESOP Ethernet packet and then transmitted to an OLT side in an Ethernet over GEM manner. After the packet is received by the OLT, a TDM traffic flow may be restored by a TDM upstream interface board, thereby implementing centralized uploading of the TDM service; the TDM traffic flow may also be continuously forwarded to an upper layer network, and set and processed by the upper layer network. A forwarding model established by the OLT for a CESOP service is a traffic flow of VLAN switching.
   In the CESOP manner, a user needs to know in advance that a TDM encapsulation type supported by the ONT is CESOP, and manually configure a forwarding model corresponding to the CESOP encapsulation type on the OLT; the user needs to perceive a difference in TDM encapsulation of the ONT, and configuration is relatively cumbersome, which does not help service release.
(3) ToE (TDM over Ethernet, TDM over Ethernet) manner: A valid payload is a ToE Ethernet packet. CESOP is a standard encapsulation mode in the industry, and a manner obtained by simplifying and customizing CESOP is called the ToE manner. ToE is privately customized, and compared with CESOP, benefits of private customization of ToE are encapsulation simplification, and no requirement for IP and UDP encapsulation on a TDM packet, which saves a bandwidth. A forwarding model established by the OLT for a ToE service is a traffic flow of VLAN switching.

In the ToE manner, a user needs to know in advance that a TDM encapsulation type supported by the ONT is ToE, and manually configure a forwarding model corresponding to the ToE encapsulation type on the OLT; the user needs to perceive a difference in TDM encapsulation of the ONT, and configuration is relatively cumbersome, which does not help service release.

EP 1467590 A1, Marcelo Alves Guimaraes et al "Fractional E1 transport in Gigabit Passive Optical Network", EP 2395682, CN 101150876 A and EP 2348691 discuss different approaches to forwarding in TDM systems.

### SUMMARY

Aspects of these inventions are provided in the attached claims.

In the present application, the OLT can automatically learn a TDM encapsulation type supported by the ONT, and when the OLT performs TDM service configuration, the OLT automatically switches the TDM forwarding model and does not need to concern about a TDM encapsulation mode actually supported by the ONT. A user does not need to perceive a difference in TDM encapsulation supported by the ONT, and configuration is simple, which can implement flexibly provisioning of a TDM service.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for processing a TDM service according to a first embodiment of the present application;
FIG. 2 is a flowchart of a method for processing a TDM service according to a second embodiment of the present application;
FIG. 3 is a flowchart of a possible implementation manner of determining an encapsulation mode of a TDM packet in the second embodiment;
FIG. 4 is a flowchart of a method for processing a TDM service according to a third embodiment of the present application;
FIG. 5 is a flowchart of a possible implementation manner of determining an encapsulation mode of a TDM packet in the third embodiment;
FIG. 6 is a flowchart of a possible implementation manner for scenario 1 in which an OLT switches a forwarding model according to an encapsulation mode of a TDM packet according to a fourth embodiment;
FIG. 7 is a flowchart of a possible implementation manner for scenario 2 in which an OLT switches a forwarding model according to an encapsulation mode of a TDM packet according to a fifth embodiment;
FIG. 8 is a structural diagram of an apparatus for processing a TDM service according to a sixth embodiment of the present application;
FIG. 9 is a structural diagram of an apparatus for processing a TDM service according to a seventh embodiment of the present application;
FIG. 10 is a structural diagram of an apparatus for processing a TDM service according to an eighth embodiment of the present application;
FIG. 11 is a structural diagram of a GPON system;
FIG. 12 is a structural diagram of a system for processing a TDM service according to a tenth embodiment of the present application; and
FIG. 13 is a structural diagram of a system for processing a TDM service according to the tenth embodiment of the present application.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The present application provides a method, an apparatus and a system for processing a TDM service, which can simplify a process of configuring a forwarding model on an OLT and facilitate release of a TDM service. The following gives a detailed description separately.

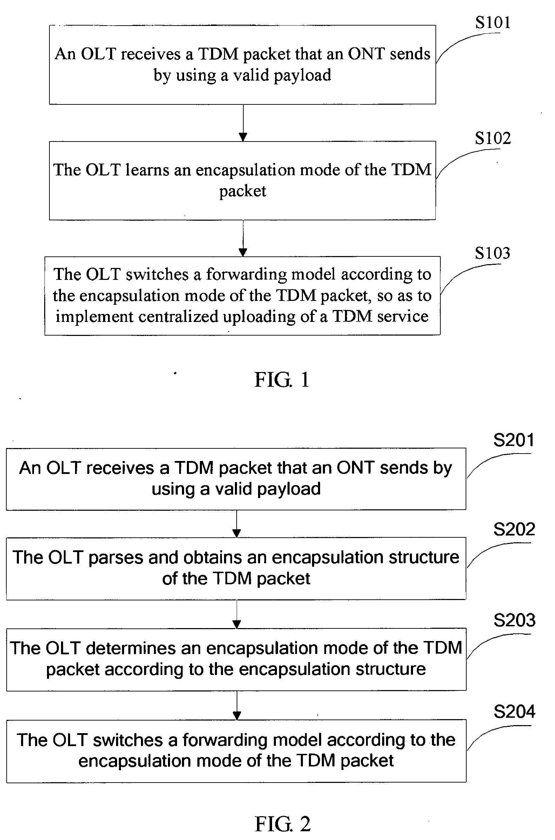

Referring to FIG. 1, FIG. 1 is a flowchart of a method for processing a TDM service according to a first embodiment of the present application. As shown in FIG. 1, this method includes the following steps:
S101. An OLT receives a TDM packet that an ONT sends by using a valid payload.

In a GPON system, a TDM service tunnel is established from an ONT to an OLT, a TDM packet is packetized and encapsulated into a valid payload and then transmitted on a GPON network, the valid payload is received on the OLT and converted into TDM, and after being converged, valid payloads are uploaded to a public switched telephone network (Public Switched Telephone Network, PSTN) in a centralized manner. Currently, a valid payload for carrying a TDM packet is mainly GEM, CESOP, ToE, or the like.

S102. The OLT learns an encapsulation mode of the TDM packet.

The OLT automatically learns the encapsulation mode of the TDM packet, and a user does not need to perceive a difference in the encapsulation mode of the TDM packet on an ONT side, thereby further implementing a smart and universally applicable GPON.

S103. The OLT switches a forwarding model according to the encapsulation mode of the TDM packet, so as to implement centralized uploading of a TDM service.

After learning the encapsulation mode of the TDM packet, the OLT can automatically switch the forwarding model according to the encapsulation mode of the TDM packet, without a user's manual configuration. There are two scenarios in which the OLT automatically switches the forwarding model: 1. After the OLT learns the encapsulation mode of the TDM packet when the ONT goes online, the OLT automatically configures a corresponding forwarding model. 2. When the encapsulation mode of the TDM packet changes after the ONT goes online, and when a change occurs in the encapsulation mode of the TDM packet that is learnt by the OLT, the OLT automatically adjusts a corresponding forwarding model.

In this embodiment, the OLT automatically learns the encapsulation mode of the TDM packet; when the OLT performs TDM service configuration, the OLT automatically switches the TDM forwarding model, and does not need to concern about a TDM encapsulation mode actually supported by the ONT. The user does not need to perceive a difference in TDM encapsulation supported by the ONT, and configuration is simple, thereby facilitating release of a TDM service.

Referring to FIG. 2, FIG. 2 is a flowchart of a method for processing a TDM service according to a second embodiment of the present application. As shown in FIG. 2, this method includes the following steps.

S201. An OLT receives a TDM packet that an ONT sends by using a valid payload.

S202. The OLT parses and obtains an encapsulation structure of the TDM packet.

In a Native TDM manner, a GEM frame includes a 5-byte frame header and payload, and a packet does not have a VLAN. In a CESOP manner, encapsulation of a CESOP Ethernet packet includes a payload, an IP (Internet Protocol, Internet Protocol) address, a UDP (User Datagram Protocol, User Datagram Protocol), a VLAN (Virtual Local Area Network, virtual local area network), an SMAC (Source Medium/Media Access Control, Source Medium/Media Access Control) address, and a DMAC (Destination Medium/Media Access Control, Destination Medium/Media Access Control) address. CESOP is an industry standard and a manner obtained by simplifying and customizing the CESOP is called a ToE manner. Compared with CESOP, ToE does not require complex configuration of CESOP, where IP+UDP is not required in a packet structure and the OLT only needs to assign a DMAC, a SMAC and a VLAN of an Ethernet packet to the ONT. Therefore, encapsulation of a ToE Ethernet packet includes a payload, a VLAN, a SMAC, and a DMAC.

S203. The OLT determines an encapsulation mode of the TDM packet according to the encapsulation structure.

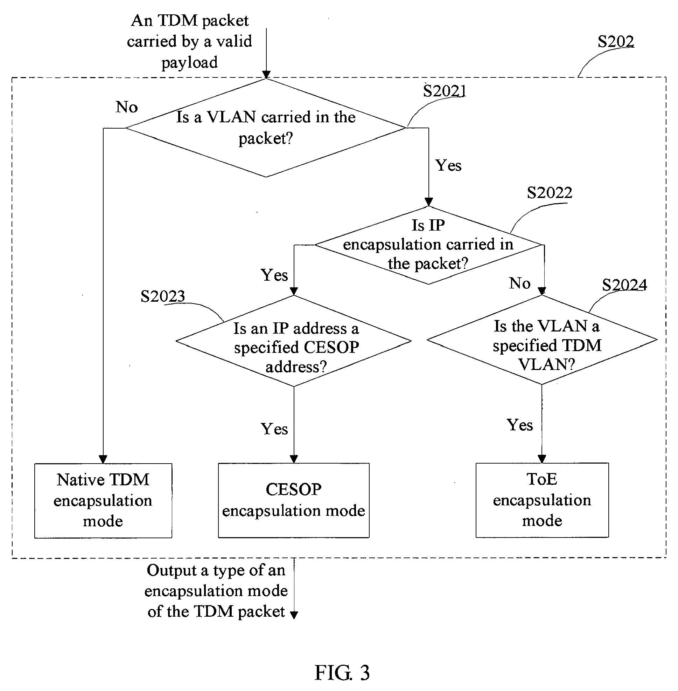

Referring to FIG. 3, FIG. 3 shows a possible implementation manner in which an OLT determines an encapsulation mode of a TDM packet. Specific steps are described in the following content.

S204. The OLT switches a forwarding model according to the encapsulation mode of the TDM packet.

When the OLT performs TDM service configuration after learning the TDM encapsulation mode, the OLT may automatically switch the TDM forwarding model according to the TDM encapsulation mode, and does not need to concern about a TDM encapsulation mode actually supported by the ONT.

In this embodiment, a possible implementation manner in which the OLT determines the encapsulation mode of the TDM packet according to the packet structure of the valid payload as described in step S202 is shown in FIG. 3, and the implementation manner includes:
S2021. Whether a VLAN is carried in a packet.

First, it is determined whether a VLAN is carried in a packet. As described in the foregoing step S202, the GEM packet does not have a VALN; therefore, if no VLAN is carried in the packet, it can be determined that the encapsulation mode of the TDM packet is Native TDM.

S2022. Whether IP encapsulation is carried in the packet.

As described in the foregoing step S202, a VLAN is carried in both CESOP and ToE encapsulation, and a difference lies in that the ToE manner is obtained by simplifying and customizing CESOP, and there is no IP+UDP in the packet structure; therefore, if a VLAN is carried in the packet, it is further determined whether IP encapsulation is carried in the packet, so as to distinguish CESOP and ToE.

S2023. Whether an IP address is a specified CESOP address.

If the IP encapsulation is carried in the packet and the IP address is the specified CESOP address, the CESOP encapsulation mode can be determined.

S2024. Whether the VLAN is a specified TDM VLAN.

If no IP encapsulation is carried in the packet and the VLAN is the specified TDM VLAN, the ToE encapsulation mode can be determined.

In this embodiment, the OLT determines the encapsulation mode of the TDM packet according to the packet structure of the valid payload, and automatically switches the forwarding model according to the encapsulation mode of the TDM packet to establish a TDM traffic flow adapted to the TDM encapsulation mode that is supported by the ONT. A user does not need to perceive a difference in TDM encapsulation on the ONT side and the OLT performs automatic configuration and supports various types of TDM encapsulation of the ONT, thereby greatly simplifying a configuration process and facilitating release of a TDM service.

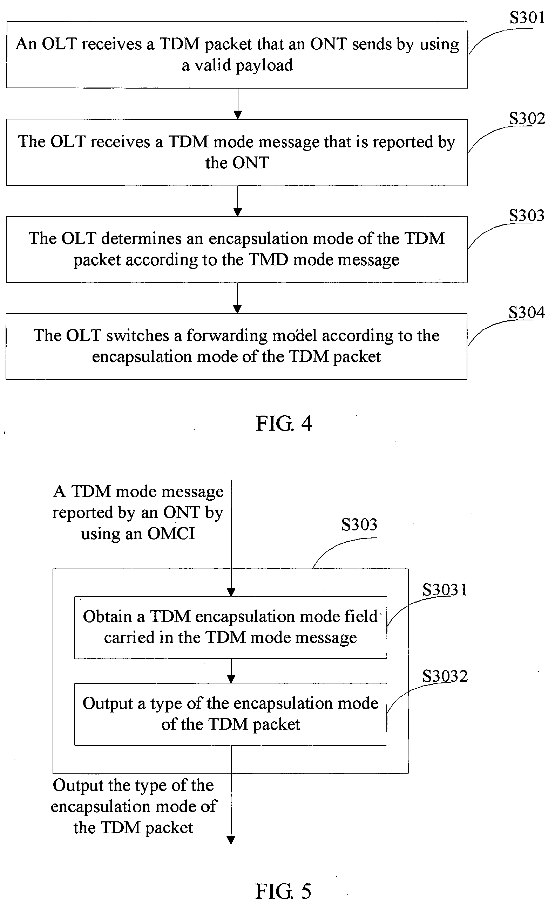

Referring to FIG. 4, FIG. 4 is a flowchart of a method for processing a TDM service according to a third embodiment of the present application, where an OLT determines an encapsulation mode of a TDM packet by learning a TDM encapsulation mode message that is reported by an ONT. Specific steps include:
S301. An OLT receives a TDM packet that an ONT sends by using a valid payload.
S302. The OLT receives a TDM encapsulation mode message that is reported by the ONT.

The ONT may report the TDM encapsulation mode message by using an OMCI (ONT Management and Control Interface, ONT management and control interface) message.

S303. The OLT determines an encapsulation mode of the TDM packet according to the TDM encapsulation mode message.

For a possible implementation manner in which the OLT determines the encapsulation mode of the TDM packet, reference is made to FIG. 5, and specific steps are described in the following content.

S304. The OLT switches a forwarding model according to the encapsulation mode of the TDM packet.

When the OLT performs TDM service configuration after learning the TDM encapsulation mode, the OLT may automatically switch the TDM forwarding model according to the TDM encapsulation mode, and does not need to concern about a TDM encapsulation mode actually supported by the ONT.

In this embodiment, a possible implementation manner in which the OLT determines the encapsulation mode of the TDM packet according to the TDM encapsulation mode message as described in step S303 is shown in FIG. 5, and the implementation manner includes:

S3031. Obtain a TDM encapsulation mode field carried in the TDM encapsulation mode message.

S3032. Output a type of the encapsulation mode of the TDM packet.

In this embodiment, the TDM encapsulation mode message is reported by the ONT, and the OLT can directly obtain a type of the TDM encapsulation mode according to the message, where a simple determining method is used. After obtaining the TDM encapsulation mode, the OLT automatically switches a forwarding model according to the encapsulation mode of the TDM packet to establish a TDM traffic flow adapted to the TDM encapsulation mode that is supported by the ONT. A user does not need to perceive a difference in the TDM encapsulation mode on the ONT side, and the OLT performs automatic configuration and supports various types of TDM encapsulation of the ONT, thereby greatly simplifying a configuration process and facilitating release of a TDM service.

There are two scenarios in which the OLT switches the forwarding model according to the encapsulation mode of the TDM packet: 1. After the OLT learns the encapsulation mode of the TDM packet when the ONT goes online, the OLT automatically configures a corresponding forwarding model. 2. When the encapsulation mode of the TDM packet changes after the ONT goes online, and when the OLT learns that a change occurs in the encapsulation mode of the TDM packet, the OLT automatically adjusts a corresponding forwarding model, so as to support a new encapsulation mode. A fourth embodiment and a fifth embodiment are flowcharts of possible implementation manners for the foregoing two scenarios respectively.

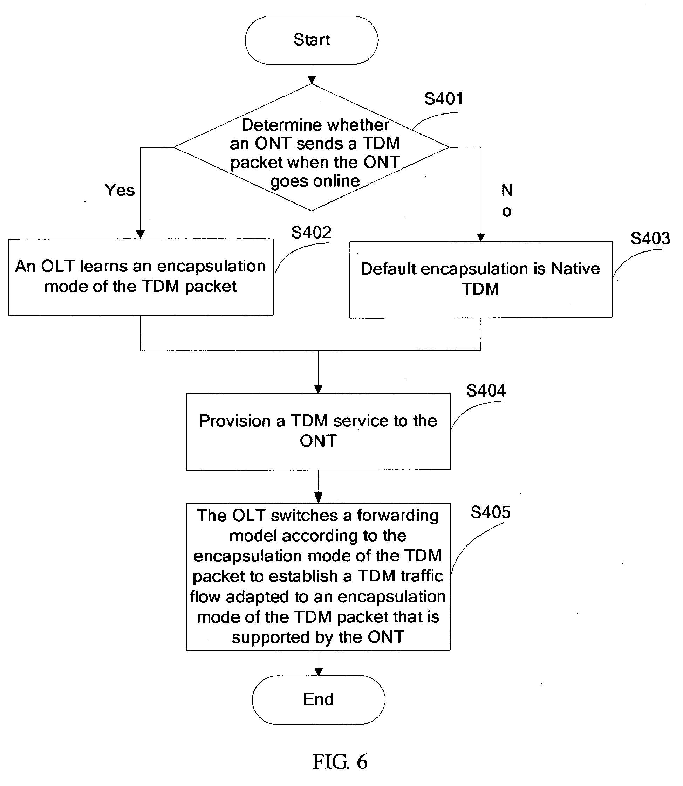

Referring to FIG. 6, FIG. 6 is a flowchart of a possible implementation manner for scenario 1 in which an OLT switches a forwarding model according to an encapsulation mode of a TDM packet according to the fourth embodiment, which includes:
S401. Determine whether an ONT sends a TDM packet when the ONT goes online.
S402. An OLT learns an encapsulation mode of the TDM packet.

If the ONT sends a TDM packet when it goes online, the OLT automatically learns an encapsulation mode of the TDM packet. For a method for learning an encapsulation mode of a TDM packet, reference is made to the possible implementation manner in step S202 of the second embodiment or the possible implementation manner in step S303 of the third embodiment, and details are not described herein again.

S403. Default encapsulation is Native TDM.

If no TDM packet is sent when the ONT goes online, the OLT considers that the encapsulation mode supported by the ONT is Native TDM by default.

S404. Provision a TDM service to the ONT. The OLT provisions a TDM service to the ONT, and configures a service for the ONT. After the service is configured for the ONT, the ONT is allowed to use the TDM service and a tunnel for the TDM service is connected. The OLT controls, by using the method for configuring a service for the ONT, the rights of each user to access the Internet, make a call and so on.

S405. The OLT switches a forwarding model according to the encapsulation mode of the TDM packet to establish a TDM traffic flow adapted to the encapsulation mode of the TDM packet that is supported by the ONT. After the OLT switches the forwarding model, configuration and provisioning of the TDM service for the ONT are successful.

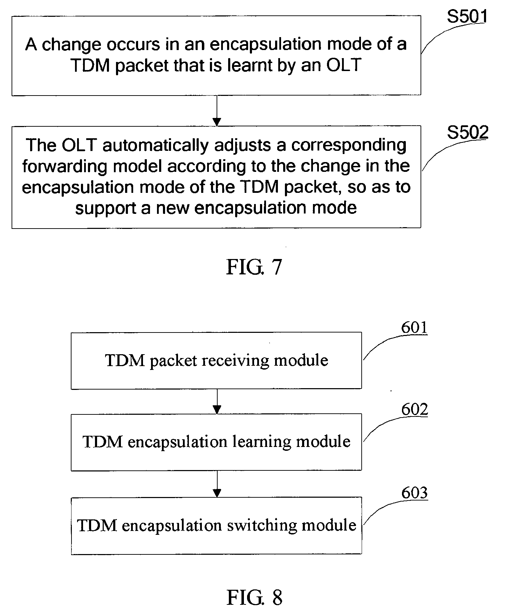

Referring to FIG. 7, FIG. 7 is a flowchart of a possible implementation manner for scenario 2 in which an OLT switches a forwarding model according to an encapsulation mode of a TDM packet according to the fifth embodiment. After configuration and provisioning of a service performed by the OLT for an ONT are successful, and when an encapsulation mode of the ONT changes, a configuration process of the OLT includes:
S501. A change occurs in an encapsulation mode of a TDM packet that is learnt by an OLT.

For a method for learning an encapsulation mode of a TDM packet, reference is made to the possible implementation manner in step S202 of the second embodiment or the possible implementation manner in step S303 of the third embodiment, and details are not described herein again.

S502. The OLT automatically adjusts a corresponding forwarding model according to the change in the encapsulation mode of the TDM packet, so as to support a new encapsulation mode. When the encapsulation mode of the TDM packet that is learnt by the OLT changes, the OLT automatically adjusts the corresponding forwarding model according to the change in the encapsulation mode of the TDM packet, so as to support a new encapsulation mode without modifying TDM configuration, thereby greatly simplifying the configuration process.

Referring to FIG. 8, FIG. 8 is a structural diagram of an apparatus for processing a TDM service according to a sixth embodiment of the present application, which includes:
a TDM packet receiving module 601, configured to receive a TDM packet that an ONT sends by using a valid payload;
a TDM encapsulation learning module 602, configured to learn an encapsulation mode of the TDM packet received by the TDM packet receiving module, where
for a method for learning an encapsulation mode of a TDM packet, reference is made to the possible implementation manner in step S202 of the second embodiment or the possible implementation manner in step S303 of the third embodiment, and details are not described herein again; and
a TDM encapsulation switching module 603, configured to switch a forwarding model according to the encapsulation mode of the TDM packet that is learnt by the TDM encapsulation learning module.

The apparatus for processing a TDM service provided in this embodiment is located on the OLT side, so that the OLT can automatically learn the encapsulation mode of the TDM packet and switch the forwarding model according to the encapsulation mode of the TDM packet, and a user does need to perceive a difference in an encapsulation mode of the TDM packet on the ONT side, which simplifies a configuration process on the OLT side and facilitates release of a TDM service.

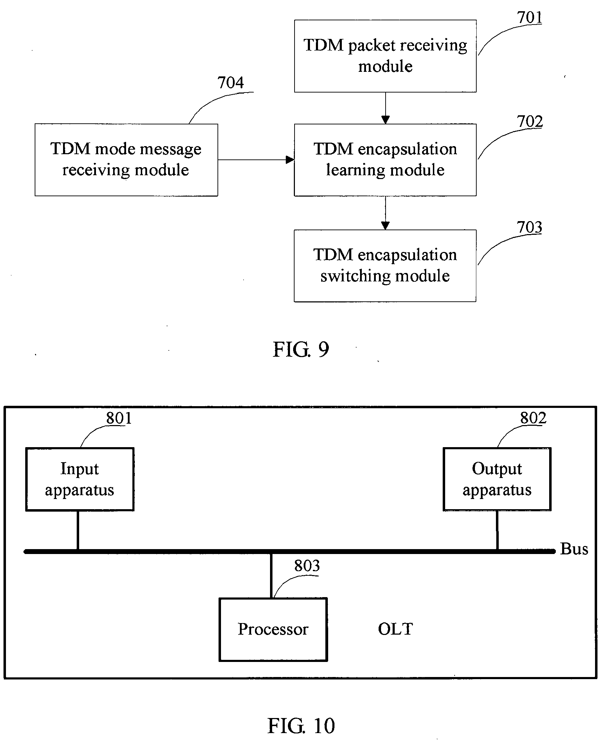

Referring to FIG. 9, FIG. 9 is a structural diagram of an apparatus for processing a TDM service according to a seventh embodiment of the present application, which includes:
a TDM packet receiving module 701, configured to receive a TDM packet that an ONT sends by using a valid payload;
a TDM encapsulation learning module 702, configured to learn an encapsulation mode of the TDM packet received by the TDM packet receiving module, where
for a method for learning an encapsulation mode of a TDM packet, reference is made to the possible implementation manner in step S202 of the second embodiment or the possible implementation manner in step S303 of the third embodiment, and details are not described herein again;
a TDM encapsulation switching module 703, configured to switch a forwarding model according to the encapsulation mode of the TDM packet that is learnt by the TDM encapsulation learning module; and
a TDM encapsulation mode message receiving module 704, configured to receive a TDM encapsulation mode message that is reported by the ONT, where
the ONT may report the TDM encapsulation mode message by using an OMCI message.

In this embodiment, the TDM encapsulation mode message is reported by the ONT, the apparatus for processing a TDM service on the OLT side can directly obtain a type of the TDM encapsulation mode according to the message, where a simple determining method is used. After obtaining the TDM encapsulation mode, the OLT automatically switches the forwarding model according to the encapsulation mode of the TDM packet to establish a TDM traffic flow adapted to a TDM encapsulation mode that is supported by the ONT. A user does not need to perceive a difference in the TDM encapsulation mode on the ONT side, and the OLT performs automatic configuration and supports various types of TDM encapsulation of the ONT, thereby greatly simplifying a configuration process and facilitating release of a TDM service.

Referring to FIG. 10, FIG. 10 is a structural diagram of an apparatus for processing a TDM service provided in an eighth embodiment of the present application. As shown in FIG. 10, the apparatus may include an input apparatus 801, an output apparatus 802, and a processor 803. The processor 803 is located on an OLT side. A bus or another manner may be used to connect the input apparatus 801 and the processor 803, and the output apparatus 802 and the processor 803; in FIG. 10, connection by using a bus is used as an example.

The processor 803 performs the following steps:
receives a TDM packet that an ONT sends by using a valid payload;
learns an encapsulation mode of the TDM packet; and
switches a forwarding model according to the encapsulation mode of the TDM packet.

The apparatus described in FIG. 10 is located on the OLT side in a GPON system. In the apparatus described in FIG. 10, the OLT automatically learns the encapsulation mode of the TDM packet and switches the forwarding model according to the encapsulation mode of the TDM packet. A user does need to perceive a difference in an encapsulation mode of the TDM packet on the ONT side, which simplifies a configuration process on the OLT side and facilitates release of a TDM service.

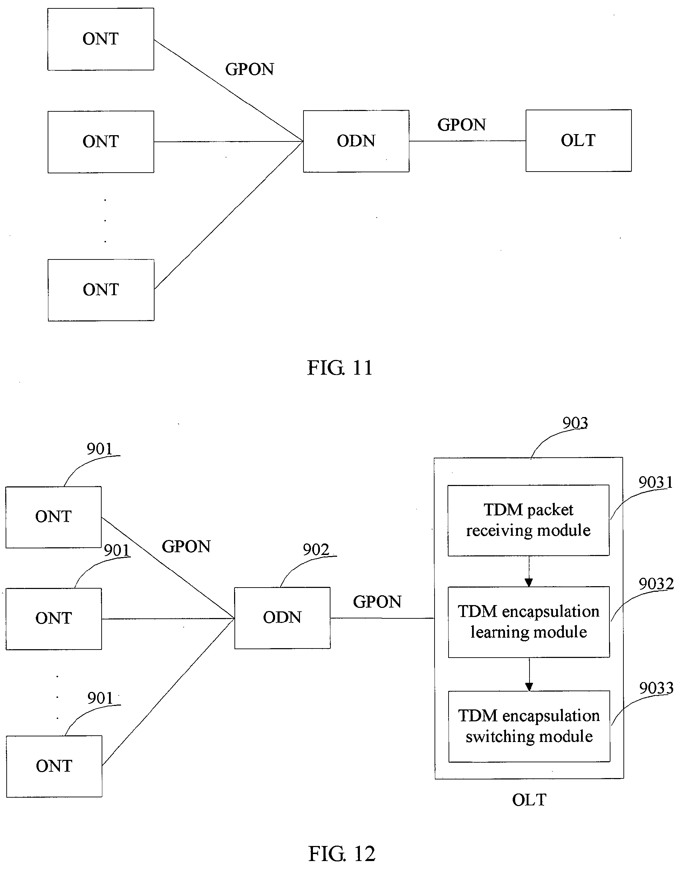

Referring to FIG. 11, FIG. 11 is a structural diagram of a GPON system, which includes an ONT, an ODN and an OLT. The OLT is located in a central equipment room and provides an upstream wide area network interface; the ONT is located on a user side and provides a user with an application interface such as 10/100BaseT, T1/E1, and DS-3; the ODN is formed of passive components, such as a splitter and a coupler. In a GPON, downstream data (OLT -> ONT) is sent in a broadcasting manner, and upstream data (ONT -> OLT) is accessed in a statistical multiplexing-based time division multiple access manner.

Referring to FIG. 12, FIG. 12 is a structural diagram of a system for processing a TDM service according to a ninth embodiment of the present application. The system includes an ONT 901, an ODN 902 and an OLT 903, where the OLT 903 includes:
a TDM packet receiving module 9031, configured to receive a TDM packet that an ONT sends by using a valid payload;
a TDM encapsulation learning module 9032, configured to learn an encapsulation mode of the TDM packet received by the TDM packet receiving module, where
for a method for learning an encapsulation mode of a TDM packet, reference is made to the possible implementation manner in step S202 of the second embodiment, and details are not described herein again; and
a TDM encapsulation switching module 9033, configured to switch a forwarding model according to the encapsulation mode of the TDM packet that is learnt by the TDM encapsulation learning module.

In this embodiment, the OLT automatically learns the encapsulation mode of the TDM packet, and when the OLT performs TDM service configuration, the OLT automatically switches the TDM forwarding model, and does not need to concern about a TDM encapsulation mode actually supported by the ONT. A user does not need to perceive a difference in TDM encapsulation supported by the ONT, and configuration is simple, thereby facilitating release of a TDM service.

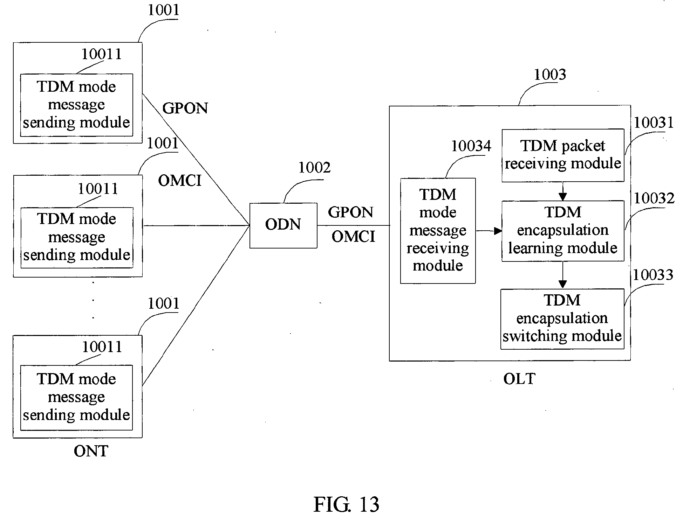

Referring to FIG. 13, FIG. 13 is a structural diagram of a system for processing a TDM service according to a tenth embodiment of the present application. The system includes an ONT 1001, an ODN 1002 and an OLT 1003, where the OLT 1003 includes:
a TDM packet receiving module 10031, configured to receive a TDM packet that an ONT sends by using a valid payload;
a TDM encapsulation learning module 10032, configured to learn an encapsulation mode of the TDM packet received by the TDM packet receiving module, where
for a method for learning an encapsulation mode of a TDM packet, reference is made to the possible implementation manner in step S303 of the third embodiment, and details are not described herein again;
a TDM encapsulation switching module 10033, configured to switch a forwarding model according to the encapsulation mode of the TDM packet that is learnt by the TDM encapsulation learning module; and
a TDM encapsulation mode message receiving module 10034, configured to receive a TDM encapsulation mode message that is reported by the ONT.

The ONT 1001 includes a TDM encapsulation mode message sending module 10011 configured to send a TDM encapsulation mode message to an OLT, where
the TDM encapsulation mode message sending module 10011 may send a TDM encapsulation mode message to the OLT by using an OMCI message.

In this embodiment, a TDM encapsulation mode message is reported by the ONT, and a type of the TDM encapsulation mode can be directly obtained on the OLT side according to the message, where a simple determining method is used. After obtaining the TDM encapsulation mode, the OLT automatically switches the forwarding model according to the encapsulation mode of the TDM packet to establish a TDM traffic flow adapted to a TDM encapsulation mode that is supported by the ONT. A user does not need to perceive a difference in the TDM encapsulation mode on the ONT side, the OLT performs automatic configuration and supports various types of TDM encapsulation of the ONT, thereby greatly simplifying a configuration process and facilitating release of a TDM service.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

Those disclosed above are merely exemplary embodiments of the present invention, but are not intended to limit the scope of the claims of the present invention. Any equivalent variation made according to the claims of the present invention shall fall within the scope of the present invention.

## Claims

1. A method for processing a TDM service in a passive optical network, **characterized by** comprising:
receiving (S201), by an OLT, a TDM packet that an ONT sends by using a valid payload, the valid payload comprising one of a GPON encapsulation mode frame, a circuit emulation service over PSN Ethernet packet or a TDM over Ethernet packet;
parsing and obtaining (S202), by the OLT, an encapsulation structure of the TDM packet;
determining (S203), by the OLT, an encapsulation mode of the TDM packet according to the encapsulation structure; and
switching (S204), by the OLT, a forwarding model according to the encapsulation mode of the TDM packet, so as to implement centralized uploading of a TDM service;
wherein switching comprises:
configuring, by the OLT, the forwarding model when the ONT goes online, or
automatically adjusting the forwarding model when the encapsulation mode of the TDM packet changes after the ONT goes online, and when a change occurs in the encapsulation mode.

2. The method according to claim 1, further comprising: receiving, by the OLT, a TDM encapsulation mode message that is reported by the ONT.

3. The method according to claim 2, wherein the learning, by the OLT, an encapsulation mode of the TDM packet comprises:
obtaining, by the OLT, a TDM encapsulation mode field carried in the TDM encapsulation mode message; and
determining, by the OLT, the encapsulation mode of the TDM packet according to the TDM encapsulation mode field.

4. An apparatus for processing a TDM service in a passive optical network, **characterized by** comprising:
a TDM packet receiving module (601), configured to receive a TDM packet that an ONT sends by using a valid payload, the valid payload comprising one of a GPON encapsulation mode frame, a circuit emulation service over PSN Ethernet packet or a TDM over Ethernet packet;
a TDM encapsulation learning module (602), configured to parse and obtain an encapsulation structure of the TDM packet received by the TDM packet receiving module and determine an encapsulation mode of the TDM packet according to the encapsulation structure; and
a TDM encapsulation switching module (603), configured to switch a forwarding model according to the encapsulation mode of the TDM packet, which is learnt by the TDM encapsulation learning module, so as to implement centralized uploading of a TDM service;
wherein switching comprises:
configuring, by the OLT, the forwarding model when the ONT goes online, or
automatically adjusting the forwarding model when the encapsulation mode of the TDM packet changes after the ONT goes online, and when a change occurs in the encapsulation mode.

5. The apparatus according to claim 4, further comprising a TDM encapsulation mode message receiving module, configured to receive a TDM encapsulation mode message that is reported by the ONT.

6. The apparatus according to claim 5, wherein in the TDM encapsulation learning module, the learning an encapsulation mode of the TDM packet comprises:
obtaining a TDM encapsulation mode field carried in the TDM encapsulation mode message; and
determining the encapsulation mode of the TDM packet according to the TDM encapsulation mode field.

7. A system for processing a TDM service, comprising an ONT, an ODN and an OLT, wherein the OLT comprises the apparatus of claim 4.

8. The system according to claim 7, wherein the ONT comprises a TDM encapsulation mode message sending module, configured to send a TDM encapsulation mode message to the OLT.

9. The system according to claim 8, wherein the OLT further comprises a TDM encapsulation mode message receiving module, configured to receive the TDM encapsulation mode message that is sent by the ONT.

## Patentansprüche

1. Verfahren zum Verarbeiten eines TDM-Services in einem passiven optischen Netzwerk, **dadurch gekennzeichnet, dass** es Folgendes umfasst:
Empfangen (S201), durch ein OLT, eines TDM-Pakets, das ein ONT unter Verwendung einer gültigen Nutzlast sendet, wobei die gültige Nutzlast einen GPON-Einkapselungsmodusrahmen oder einen Schaltkreisemulationsdienst über ein PSN-Ethernet-Paket oder ein TDM-über-Ethernet-Paket umfasst;
Parsen und Erhalten (S202), durch das OLT, einer Einkapselungsstruktur des TDM-Pakets;
Bestimmen (S203), durch das OLT, eines Einkapselungsmodus des TDM-Pakets gemäß der Einkapselungsstruktur; und
Schalten (S204), durch das OLT, eines Weiterleitungsmodells gemäß dem Einkapselungsmodus des TDM-Pakets, um so zentralisiertes Hochladen eines TDM-Dienstes zu implementieren;
wobei Schalten Folgendes umfasst:
Konfigurieren, durch das OLT, des Weiterleitungsmodells, wenn das ONT online geht, oder
Automatisches Anpassen des Weiterleitungsmodells, wenn sich der Einkapselungsmodus des TDM-Pakets ändert, nachdem das ONT online ging, und wenn eine Änderung im Einkapselungsmodus auftritt.

2. Verfahren nach Anspruch 1, das ferner umfasst: Empfangen, durch das OLT, einer TDM-Einkapselungsmodus-Nachricht, die von dem ONT gemeldet wird.

3. Verfahren nach Anspruch 2, wobei das Lernen, durch das OLT, eines Einkapselungsmodus des TDM-Pakets Folgendes umfasst:
Erhalten, durch das OLT, eines TDM-Einkapselungsmodusfeldes, das in der TDM-Einkapselungsmodus-Nachricht geführt wird; und
Bestimmen, durch das OLT, des Einkapselungsmodus des TDM-Pakets gemäß dem TDM-Einkapselungsmodusfeld.

4. Vorrichtung zum Verarbeiten eines TDM-Dienstes in einem passiven optischen Netzwerk, **dadurch gekennzeichnet, dass** es Folgendes umfasst:
ein TDM-Paketempfangsmodul (601), das ausgelegt ist zum Empfangen eines TDM-Pakets, das ein ONT unter Verwendung einer gültigen Nutzlast sendet, wobei die gültige Nutzlast einen GPON-Einkapselungsmodusrahmen oder einen Schaltkreisemulationsdienst über ein PSN-Ethernet-Paket oder ein TDM-über-Ethernet-Paket umfasst;
ein TDM-Einkapselungslernmodul (602), das ausgelegt ist zum Parsen und Erhalten einer Einkapselungsstruktur des TDM-Pakets, das von dem TDM-Paketempfangsmodul empfangen wurde, und zum Bestimmen eines Einkapselungsmodus des TDM-Pakets gemäß der Einkapselungsstruktur; und
ein TDM-Einkapselungsschaltmodul (603), das ausgelegt ist zum Schalten eines Weiterleitungsmodells gemäß dem Einkapselungsmodus des TDM-Pakets, das von dem TDM-Einkapselungslernmodul gelernt wurde, um so zentralisiertes Hochladen eines TDM-Dienstes zu implementieren;
wobei Schalten Folgendes umfasst:
Konfigurieren, durch das OLT, des Weiterleitungsmodells, wenn das ONT online geht, oder
Automatisches Anpassen des Weiterleitungsmodells, wenn sich der Einkapselungsmodus des TDM-Pakets ändert, nachdem das ONT online ging, und wenn eine Änderung im Einkapselungsmodus auftritt.

5. Vorrichtung nach Anspruch 4, die ferner ein TDM-Einkapselungsmodus-Nachrichtenempfangsmodul umfasst, das ausgelegt ist zum Empfangen einer TDM-Einkapselungsmodus-Nachricht, die von dem ONT gemeldet wird.

6. Vorrichtung nach Anspruch 5, wobei in dem TDM-Einkapselungslernmodul das Lernen eines Einkapselungsmodus des TDM-Pakets Folgendes umfasst:
Erhalten eines TDM-Einkapselungsmodusfeldes, das in der TDM-Einkapselungsmodus-Nachricht geführt wird; und
Bestimmen des Einkapselungsmodus des TDM-Pakets gemäß dem TDM-Einkapselungsmodusfeld.

7. System zum Verarbeiten eines TDM-Dienstes, das ein ONT, ein ODN und ein OLT umfasst, wobei das OLT die Vorrichtung nach Anspruch 4 umfasst.

8. System nach Anspruch 7, wobei das ONT ein TDM-Einkapselungsmodus-Nachrichtensendemodul umfasst, das ausgelegt ist zum Senden einer TDM-Einkapselungsmodus-Nachricht an das OLT.

9. System nach Anspruch 8, wobei das OLT ferner ein TDM-Einkapselungsmodus-Nachrichtenempfangsmodul umfasst, das ausgelegt ist zum Empfangen der TDM-Einkapselungsmodus-Nachricht, die von dem ONT gesendet wurde.

## Revendications

1. Procédé permettant de traiter un service TDM dans un réseau optique passif, **caractérisé en ce qu'**il comprend les étapes suivantes :
recevoir (S201), par un OLT, un paquet TDM qu'un ONT envoie en utilisant un champ de données utiles valide, le champ de données utiles valide comportant un élément parmi une trame de mode d'encapsulation GPON, un paquet de service d'émulation de circuit sur PSN Ethernet ou un paquet TDM sur Ethernet ;
analyser et obtenir (S202), par l'OLT, une structure d'encapsulation du paquet TDM ;
déterminer (S203), par l'OLT, un mode d'encapsulation du paquet TDM selon la structure d'encapsulation ; et
commuter (S204), par l'OLT, un modèle d'acheminement selon le mode d'encapsulation du paquet TDM, afin de mettre en oeuvre un téléchargement centralisé d'un service TDM ;
l'étape de commutation comprenant :
configurer, par l'OLT, le modèle d'acheminement lorsque l'ONT se connecte, ou
ajuster automatiquement le modèle d'acheminement lorsque le mode d'encapsulation du paquet TDM change après que l'ONT s'est connecté, et lorsqu'un changement se produit dans le mode d'encapsulation.

2. Procédé selon la revendication 1, comprenant en outre : recevoir, par l'OLT, un message de mode d'encapsulation TDM qui est transmis par l'ONT.

3. Procédé selon la revendication 2, dans lequel l'étape consistant à apprendre, par l'OLT, un mode d'encapsulation du paquet TDM comprend :
obtenir, par l'OLT, un champ de mode d'encapsulation TDM contenu dans le message de mode d'encapsulation TDM ; et
déterminer, par l'OLT, le mode d'encapsulation du paquet TDM selon le champ de mode d'encapsulation TDM.

4. Appareil permettant de traiter un service TDM dans un réseau optique passif, **caractérisé en ce qu'**il comprend :
un module de réception de paquet TDM (601), configuré pour recevoir un paquet TDM qu'un ONT envoie en utilisant un champ de données utiles valide, le champ de données utiles valide comportant un élément parmi une trame de mode d'encapsulation GPON, un paquet de service d'émulation de circuit sur PSN Ethernet ou un paquet TDM sur Ethernet ;
un module d'apprentissage d'encapsulation TDM (602), configuré pour analyser et obtenir une structure d'encapsulation du paquet TDM reçu par le module de réception de paquet TDM et déterminer un mode d'encapsulation du paquet TDM selon la structure d'encapsulation ; et
un module de commutation d'encapsulation TDM (603), configuré pour commuter un modèle d'acheminement selon le mode d'encapsulation du paquet TDM, qui est appris par le module d'apprentissage d'encapsulation TDM, afin de mettre en oeuvre un téléchargement centralisé d'un service TDM ;
l'étape de commutation comprenant :
configurer, par l'OLT, le modèle d'acheminement lorsque l'ONT se connecte, ou
ajuster automatiquement le modèle d'acheminement lorsque le mode d'encapsulation du paquet TDM change après que l'ONT s'est connecté, et lorsqu'un changement se produit dans le mode d'encapsulation.

5. Appareil selon la revendication 4, comprenant en outre un module de réception de message de mode d'encapsulation TDM, configuré pour recevoir un message de mode d'encapsulation TDM qui est transmis par l'ONT.

6. Appareil selon la revendication 5, dans lequel, dans le module d'apprentissage d'encapsulation TDM, l'étape consistant à apprendre un mode d'encapsulation du paquet TDM comprend :
obtenir un champ de mode d'encapsulation TDM contenu dans le message de mode d'encapsulation TDM ; et
déterminer le mode d'encapsulation du paquet TDM selon le champ de mode d'encapsulation TDM.

7. Système permettant de traiter un service TDM, comprenant un ONT, un ODN et un OLT, dans lequel l'OLT comprend l'appareil selon la revendication 4.

8. Système selon la revendication 7, dans lequel l'ONT comprend un module d'envoi de message de mode d'encapsulation, configuré pour envoyer un message de mode d'encapsulation TDM à l'OLT.

9. Système selon la revendication 8, dans lequel l'OLT comprend en outre un module de réception de message de mode d'encapsulation TDM, configuré pour recevoir le message de mode d'encapsulation TDM qui est envoyé par l'ONT.
